# EUROPEAN PATENT SPECIFICATION

(11) **EP 1 388 562 B1**
(45) Date of publication and mention of the grant of the patent: **22.11.2006**
(21) Application number: 03254712.7
(22) Date of filing: 28.07.2003
(51) Int. Cl.: C08K 5/103, C08K 5/42, C08L 67/04

(54) **Biodegradable polyester resin composition and films, sheets and other molded articles thereof**
Biologisch abbaubare Polyesterzusammensetzung und daraus geformte Filme, Folien sowie weitere geformte Gegenstände
Composition de polyester biodégradable et films, feuilles et articles moulés à partir de cette composition

(30) Priority: 05.08.2002 JP 2002227323
(43) Date of publication of application: 11.02.2004
(73) Proprietor: RIKEN VITAMIN CO., LTD., Chiyoda-ku, Tokyo (JP)
(72) Inventor: Hasebe, Tadashi, Hirakata-city, Osaka-Prefecture (JP); Sashida, Kazuyuki, Yawata-City, Kyoto-Prefecture (JP)
(74) Representative: Stuart, Ian Alexander

(56) References cited:
- EP-A- 0 814 092
- EP-A- 1 097 967
- US-A- 6 110 578

## Description

The present invention relates to biodegradable polyester resin composition and films, sheets and other molded articles thereof. In preferred embodiments the invention relates to biodegradable polyester resin composition excellent in anti-static ability, wherein a specific antistatic agent is contained in biodegradable polyester resin mainly composed by polylactic acid and to films, sheets and other molded articles obtained by molding the said biodegradable polyester resin composition.

Synthetic resins such as polyethylene, polystyrene, polypropylene and polyvinyl chloride have been extensively used in various areas, for example, food packaging, construction materials and household electrical goods, finding an indispensable position in daily life.

These synthetic resins are excellent in durability, which, however, results in poor degradability in nature, adversely effecting the ecological system and causing environmental destruction when they are disposed after use.

Biodegradable plastics (or biodegradable plastic resins) are now attracting attention due to properties that can overcome the above disadvantage. Biodegradable plastics can be degraded into low molecular compounds in an extremely short period of time by the actions of enzymes produced by environmentally present microorganisms and finally degraded into water and carbon dioxide.

In recent years, people have become increasingly aware of the environment due to increased consciousness of the natural environment. In Japan as well, as required by laws and regulations, plastics must be recycled or reused. Further, in addition to the recycling or reuse of plastics, so-called biodegradable plastics are now attracting attention which can be easily degraded in the natural environment and have been extensively studied and developed in the public and private sectors. Biodegradable plastics are expected to find applications in agricultural materials used outdoors in particular (for example, sheets and films used in greenhouse for nursing vegetables and other materials to be used in the food packaging field where recovery is difficult).

Such biodegradable plastics are roughly classified into microbially produced group, natural product-utilized group and chemically synthesized group. Biodegradable plastics now finding practical applications includes aliphatic polyesters, modified polyvinyl alcohols, starch modifications or their mixtures.

Aliphatic polyesters include polybutylene succinate and polyhydroxy butylate, where polylactic acid is a semi-synthesized polymer.

Polylactic acid is a crystalline thermoplastic polymer similar to polyethylene in tensile strength and similar to polyethylene terephthalate in transparency, finding an application as sutures in medical use. Polylactic acid is also high in safety, lower in combustion calories (about 1/3 of that of polyethylene or polypropylene upon combustion), lower in the possibility of damaging an incinerator and produces a smaller quantity of toxic gas. Further, unlike petroleum-derived plastics, this substance is promising in that it is made with reusable sources of plants. For these reasons, in recent years, polylactic acid has been extensively studied and developed for production methods and applications, and is now expected to be used in a variety of fields and will be produced in ever-larger quantities.

As explained, polylactic acid is extremely excellent in transparency and is expected to find uses in films and sheets. However, in general, polymer compounds are easily electrically charged when rubbed and dust and dirt adhere, resulting in a deteriorated appearance. Thus, they are desired to have an antistatic treatment.

Antistatic agents are often used to provide an antistatic ability to polymer compounds, and these are available in two types, coated and kneaded.

As the coated type antistatic agents, followings are known, one consisting of sucrose lauric acid ester and water-soluble polymer (refer to Japanese Unexamined Patent Publication No. 2000-280410), one consisting of fluoro compounds having a par fluoroalkyl group and a par fluoroalkenyl group inside the molecules (refer to Japanese Unexamined Patent Publication No. H11-116709) and one in which specific anion surfactants and specific non-ionic surfactants are used in combination (refer to Japanese Unexamined Patent Publication No. 2002-12687). However, these coated-type antistatice agents have problems such as damaged transparency of films, sheets or plates obtained by molding polylactic acid resin or resin mainly composed of polylactic acid, development of sticky film and frequent occurrence of intra-film blocking.

On the other hand, antistatic agents of the kneaded-type include surfactants for general use, for example, anion surfactants such as aliphatic amines and alkyl sulfates, cation surfactants such as quaternary ammonium salt, non-ionic surfactants such as sorbitan fatty acid ester and glycerin fatty acid ester and ampholytic surfactants such as alkyl betaines.

However, anion surfactants, cation surfactants and ampholytic surfactants may damage the transparency which is characteristic of films, sheets and plates obtained by molding polylactic acid resin and the resin mainly composed of polylactic acid.

A non-ionic surfactant is extremely low in damaging the transparency when kneaded, but it is intrinsically low in influencing antistatic ability. As disclosed in Japanese Unexamined Patent Publication No. H10-36650, the antistatic ability can be exhibited only when it is included at 3.5~7.5 weight parts in relation to 100 weight parts of polylactic acid resin. In such an instance, a larger inclusion of the non-ionic surfactant will result in deteriorated physical properties of molded articles, representative examples of which are films, sheets and plates.

US-A-6 110 578 and EP-A-0 814 092 disclose polymers based on polylactic. Optional ingredients include antistatic agents, dispersing agents and lubricants. Alkylsulfonates and glycerin monostearates are listed as possibilities.

Preferred embodiments of the present invention may provide a biodegradable polyester resin composition as well as films, sheets, plates and other molded articles thereof, wherein an excellent antistatic ability is provided without damaging the transparency of molded articles by incorporating a specific antistatic agent into biodegradable resins such as polyester polymers or resins (polylactic acid resin or the resin mainly composed of polylactic acid, in particular).

The inventors of the present invention conducted an intensive study and discovered that, by incorporation of a specific anion surfactant and a specific non-ionic surfactant into polylactic acid resin or resin mainly composed of polylactic acid at a certain ratio, a polyester resin composition lower in damaging transparency and excellent in antistatic ability is obtainable, and achieved the invention.

More particularly, the invention comprises the following:
(1) a biodegradable polyester resin composition which contains (a) biodegradable polyester resin (b) glycerin fatty acid ester and (c) alkyl sulfonate, wherein the said glycerin fatty acid ester is saturated or unsaturated fatty acid with a carbon number of 8-22 in terms of constituent fatty acid; wherein the glycerin fatty acid ester has a monoester content of 50 w/w% or higher; a combined quantity of the said glycerin fatty acid monoester and the said alkyl sulfonate is in a range of 0.2-5 weight parts in relation to 100 weight parts of the biodegradable polyester resin; and the ratio of glycerin fatty acid monoester to alkyl sulfonate is 50/50~90/10 on a weight basis.
(2) The biodegradable polyester resin composition as set forth in the above (1), wherein polyester resin is polylactic acid resin or resin mainly composed of polylactic acid (i.e. containing at least 50% by weight of polylactic acid).
(3) The biodegradable polyester resin composition as set forth in the above (1), wherein the ratio of glycerin fatty acid monoester to alkyl sulfonate is 65/35~90/10 on a weight basis.
(4) The biodegradable polyester resin composition as set forth in the above (1), wherein the ratio of glycerin fatty acid monoester to alkyl sulfonate is 75/25~90/10 on a weight basis.
(5) Films, sheets and other molded articles obtained by molding of a biodegradable polyester resin composition, wherein the said biodegradable polyester resin composition is any of the biodegradable polyester resin compositions as set forth in the above (1) to (4).

The above invention will be explained in greater detail.

The polyester resin used in the invention is preferably polylactic acid resin or resin mainly composed of polylactic acid (i.e. at least 50% by weight polylactic acid) (hereinafter they are collectively called "polylactic acid resin). Any polylactic acid resin may be used irrespective of the degree of polymerization or quality. Further, the resin used in the invention is not limited to polylactic acid resin composed of homopolymer of polylactic acid but inclusive of homopolymer of polylactic acid that may be copolymerised, e.g. with glycol acid, ε-caprolactone, trimethylene carbonate or polyethylene glycol. Other biodegradable polymers such as copolymers of varilite with acetylcellulose, polycaprolacton, polybutylene succinate or polyhydroxy butylate, as well as chitin, chitoan and starch may be incorporated within a range so as not to affect the physical properties of polylactic acid resin.

The glycerin fatty acid ester used in the invention can be obtained by esterification of glycerin with fatty acid or by trans-esterification of fats with glycerin, the method of which is not particularly limited. Further, the glycerin fatty acid ester used in the invention is a glycerin fatty acid monoester in which molecular distillation is effected to raise the monoester content to 50 w/w% or higher. Esterification of ordinary glycerin with fatty acid fails to attain the content of monoester exceeding 50 w/w%. Therefore, molecular distillation or others should be effected to raise the content of monoester. Where the content of monoester is less than 50 w/w%, no sufficient antistatic effect can be obtained (refer to Comparative Example 7 in which Sample-4 was used as provided in the subsequent Embodiment).

Fatty acid constituting the glycerin fatty acid used in the invention is that with a carbon number of 8-22. Fatty acid with a carbon number of less than 8 is insufficient in attaining an effective kneading with the resin (refer to Comparative Example 6 in which Sample-3 was used as provided in the subsequent Embodiment). Fatty acid with a carbon number exceeding 22 is insufficient in providing antistatic effects because of the difficulty in the fatty acid coming out of the surface of the resin (refer to Comparative Example 10 in which Sample-7 was used as provided in the subsequent Embodiment)

The alkyl sulfonate used in the invention can be obtained by allowing alkane to react with sulfurous acid and neutralizing the reaction product, the method of which is not particularly limited. Further, no limitation is given to the carbon number of the alkyl group.

In the invention, the combined use ratio of glycerin fatty acid monoester to alkyl sulfonate is preferably in a range of 50/50~90/10 (weight ratio), more preferably in a range of 65/35~90/10 and particularly preferably in a range of 75/25~90/10. Where out of these ranges, in particular, the ratio of alkyl sulfonate is too high, the transparency of a molded article may be damaged or a sufficient antistatic effect may not be attained. Where no alkyl sulfonate is used at all and glycerin fatty acid monoester is exclusively used, the antistatic effect is insufficient (refer to Comparative Example 2 where only Sample-1 was used and Comparative Example 3 where only Sample-2 was used as given in the subsequent Embodiments) . The agent must be added in a larger quantity to provide the antistatic ability. Further, where no glycerin fatty acid monoester is used at all but alkyl sulfonate is exclusively used, the transparency may be damaged (refer to Comparative Example 9 where only Sample-6 was used in the subsequent Embodiment) or the effect may vary depending on poor dispersion in the resin. The combined use of glycerin fatty acid monoester and alkyl sulfonate at the above specified ratio can resolve these problems, and attain excellent antistatic effects in a synergistic fashion, thus hardly damaging the transparency of the resin.

The combined use at the above ratio of 65/35 ~ 90/10 is able to improve both surface intrinsic resistance (Ω) and total light transmittance (%) (refer to Embodiment 3 in the subsequent Embodiment) and, in particular, the combined use at the above ratio of 75/25 ~ 90/10 will improve the half life (second), total light transmittance (%) and turbidity (%) (refer to Embodiment 5 in the subsequent Embodiment).

In the invention, the incorporation ratio of the antistatic agent to the resin is in a range of 0.2-5 weight parts in relation to 100 weight parts of biodegradable polyester resin, preferably in a range of 0.5-2 weight parts. Where the ratio is lower than the above range, molded articles with the quality to be claimed in the invention cannot be obtained, and where the ratio is higher than the above range, physical properties of molded articles may be damaged.

Biodegradable polyester resin composition claimed in the invention can be subjected to thermal molding by extrusion and injection, etc., by use of an extruder or injection molding machine that is used in ordinary plastic molding. Preferable molding temperatures range from 160~220°C. A two-axis extruder is preferable in conducting a polymer blend. The resin composition melted in an extruder is molded into sheets or films through T die or inflation. The films may be treated either by extension or non-extension. The resin composition can be molded into plates or other molded articles by an injection machine.

Further, the biodegradable polyester resin composition of the invention may contain known additives such as plasticizer, stabilizing agent, smoothing agent, antioxidant, slip additive and an antifogging agent in a manner so as not to affect the antistatic ability claimed in the invention.

The present invention will be explained in detail by referring to embodiments, which shall not be construed to limit the scope of the invention.

In the Embodiments, polylactic acid, "Lacty" manufactured by Shimazu Corporation (grade #9030, mean molecular weight of 140,000) was used as the polylactic acid of the invention, treated by drying by heat at 110°C for 4 hours for the purpose of preventing a decrease in the molecular weight resulting from hydrolysis to remove moisture content, and then incorporated at the predetermined ratio into the polylactic acid resin as shown in the Test Sample (listed in Table 1) for each Embodiment and Comparative Example, and subjected to a two-axis extruder to obtain extruded pellets at 200°C. The pellets were used to prepare test pieces as listed in individual tests by injection molding, by which the surface intrinsic resistance, half life and transparency were confirmed.

### [Test-1] Surface intrinsic resistance

In the test, used is a piece measuring 100×100mm×2mm (thickness) . The piece was aged at room temperature of 20°C and RH of 65% for one week and measured for surface intrinsic resistance under the same conditions with a hyper dielectric scale SEM-10 model (Towa Electronics Ltd.). Voltage was applied at 500V to read the value one minute later.

### [Test-2] Half life of electrostatic charge

In the test, used is a piece measuring 45×40mm×2mm (thickness) . The piece was aged at room temperature of 20°C and RH of 65% for one week and measured with a Static Honestmeter S-5109 model (manufactured by Shishido Electrostatic, Ltd.) under the same conditions. The test was conducted under conditions of applied voltage, 9KV; applied time, 10 seconds; electrical discharge height, 1.5cm; electrical receiving height, 1.0cm and disk rotation frequency, 1000rpm.

### [Test-3] Transparency test

In the test, used is a piece measuring 45×40mm×2mm (thickness). Σ 90 Color Measuring System (manufactured by Nippon Denshoku Industries Co., Ltd.)was used to measure the total light transmittance and turbidity.

### [Test Sample-1] Glycerol monolaurate (POEM M-300 manufactured by Riken Vitamin Co., Ltd., content of monoester is 80 w/w%)

### [Test Sample-2] Glycerol monostearate (RIKEMAL S-100 manufactured by Riken Vitamin Co., Ltd., content of monoester is 95 w/w%)

### [Test Sample-3] Glycerol monocaproate

After esterification of one mol of glycerin with one mol of caproic acid, molecular distillation is effected to obtain glycerol monocaproate whose monoester content is 85 w/w%.

### [Test Sample-4] Glycerol laurate

Esterification of one mole of glycerin with one mole of lauric acid is effected to obtain glycerol laurate whose laurate monoester content is 40 w/w%.

### [Test Sample-5] Glycerol dilaurate

After esterification of one mole of glycerin with two moles of lauric acid, molecular distillation is effected to obtain glycerol dilaurate with purity of 85w/w%.

### [Test Sample-6] Alkyl sulfonate (ANSTEX HT-100 manufactured by Toho Chemical Industry Co., Ltd.)

### [Test Sample-7] Glycerol monolignocerate

After esterification of one mole of glycerin with one mole of lignoceric acid, molecular distillation is effected to obtain glycerol monolignocerate with purity of 85w/w%.

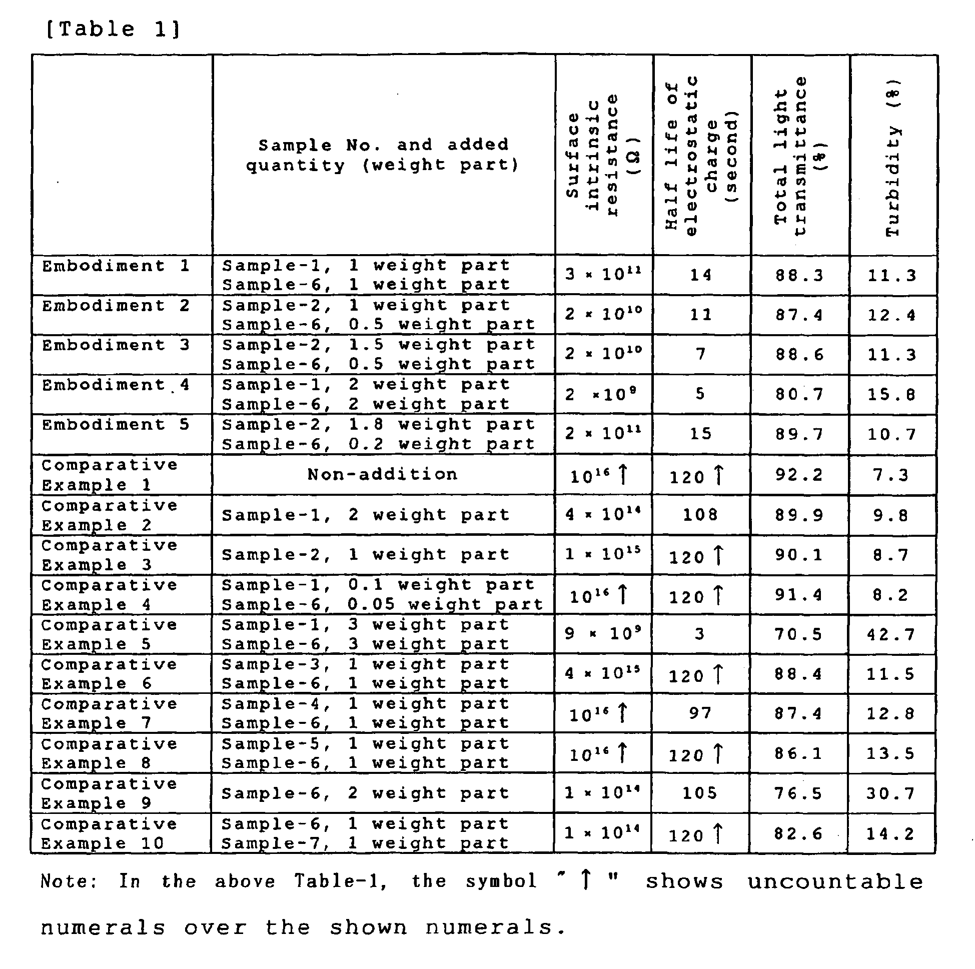

According to the present invention, when a specific glycerin fatty acid ester and alkyl sulfonate are added at a certain ratio to biodegradable polyester resin; synergistic effects are obtained in antistatic properties and transparency, making it possible to provide films, sheets and other molded articles that are manufactured with an environmentally-sound biodegradable polyester resin composition.

## Claims

1. A biodegradable polyester resin composition which contains (a) biodegradable polyester resin; (b) glycerin fatty acid ester wherein the fatty acid is saturated or unsaturated fatty acid with a carbon number of 8-22, and wherein the monoester content is 50 w/w% or higher; and (c) alkyl sulfonate; and wherein the combined quantity of the glycerin fatty acid monoester and the alkyl sulfonate is in a range of 0.2-5 weight parts in relation to 100 weight parts of the biodegradable polyester resin; and the ratio of glycerin fatty acid monoester to alkyl sulfonate is 50/50~90/10 on a weight basis.

2. The biodegradable polyester resin composition as set forth in Claim 1 wherein polyester resin is polylactic acid resin or resin containing at least 50% by weight of polylactic acid.

3. The biodegradable polyester resin composition as set forth in Claim 1 or 2 wherein the ratio of glycerin fatty acid monoester to alkyl sulfonate is 65/35~90/10 on a weight basis.

4. The biodegradable polyester resin composition as set forth in Claim 1 or 2 wherein the ratio of glycerin fatty acid monoester to alkyl sulfonate is 75/25~90/10 on a weight basis.

5. A film, sheet or molded article comprising a biodegradable polyester resin composition as set forth in any of claims 1 to 4.

6. Use of a glycerin (C₈-C₂₂) - fatty acid monoester and an alkyl sulfonate for conferring antistatic properties on a biodegradable polyester resin.

7. Use according to claim 6 in the production of a resin composition according to any of claims 1-4.

## Patentansprüche

1. Biologisch abbaubare Polyesterharzzusammensetzung, die (a) ein biologisch abbaubares Polyesterharz; (b) einen Glycerinfettsäureester, worin die Fettsäure eine gesättigte oder ungesättigte Fettsäure mit einer Kohlenstoffanzahl von 8~22 ist und worin der Monoestergehalt 50 Gew.-% oder mehr beträgt; und (c) ein Alkylsulfonat umfasst; und worin die Gesamtmenge an Glycerinfettsäuremonoester und Alkylsulfonat, bezogen auf 100 Gewichtsteile des biologisch abbaubaren Polyesterharzes, im Bereich von 0,2~5 Gewichtsteilen liegt; und worin das Gewichtsverhältnis zwischen Glycerinfettsäuremonoester und Alkylsulfonat 50:50~90:10 beträgt.

2. Biologisch abbaubare Polyesterharzzusammensetzung nach Anspruch 1, worin das Polyesterharz ein Polymilchsäureharz oder ein Harz ist, das zumindest 50 Gew.-% Polymilchsäure enthält.

3. Biologisch abbaubare Polyesterharzzusammensetzung nach Anspruch 1 oder 2, worin das Gewichtsverhältnis zwischen Glycerinfettsäuremonoester und Alkylsulfonat 65:35~90:10 beträgt.

4. Biologisch abbaubare Polyesterharzzusammensetzung nach Anspruch 1 oder 2, worin das Gewichtsverhältnis zwischen Glycerinfettsäuremonoester und Alkylsulfonat 75:25~90:10 beträgt.

5. Film, Folie oder Formteil, der/die eine biologisch abbaubare Polyesterharzzusammensetzung nach einem der Ansprüche 1 bis 4 umfasst.

6. Verwendung eines Glycerin-(C₈-C₂₂-)fettsäuremonoeesters und eines Alkylsulfonats, um einem biologisch abbaubaren Polyesterharz Antistatikeigenschaften zu verleihen.

7. Verwendung nach Anspruch 6 bei der Herstellung einer Harzzusammensetzung nach einem der Ansprüche 1 bis 4.

## Revendications

1. Composition de résine de polyester biodégradable qui contient (a) une résine de polyester biodégradable ; (b) un ester d'acide gras de glycérine où l'acide gras est un acide gras saturé ou insaturé avec un nombre de carbones de 8-22 et où la teneur en monoester est de 50 p/p% ou plus ; et (c) un alkyl sulfonate ; et où la quantité combinée du monoester d'acide gras de glycérine et de l'alkyl sulfonate est dans la gamme de 0,2~5 parties en poids relativement à 100 parties en poids de la résine de polyester biodégradable ; et le rapport du monoester d'acide gras de glycérine à l'alkyl sulfonate est de 50/50~90/10 sur une base pondérale.

2. Composition de résine de polyester biodégradable selon la revendication 1 ou 2 où la résine de polyester est une résine d'acide polylactique ou une résine contenant 50% en poids d'acide polylactique.

3. Résine de polyester biodégradable selon la revendication 1 ou 2, où le rapport du monoester d'acide gras de glycérine à l'alkyl sulfonate est de 65/35~90/10 sur une base pondérale.

4. Composition de résine de polyester biodégradable selon la revendication 1 ou 2 où le rapport du monoester d'acide gras de glycérine à l'alkyl sulfonate est de 75/25~90/10 sur une base pondérale.

5. Film, feuille ou article moulé comprenant une composition de résine de polyester biodégradable telle qu'indiquée à l'une quelconque des revendications 1 à 4.

6. Utilisation d'un monoester d'acide gras (C₈-C₂₂) de glycérine et d'un alkyl sulfonate pour conférer des propriétés antistatiques à une résine de polyester biodégradable.

7. Utilisation selon la revendication 6 dans la production d'une composition de résine selon l'une quelconque des revendications 1-4.
